Europäisches Patentamt

European Patent Office

Office européen des brevets

(11) Veröffentlichungsnummer: **0 152 742**
A1

# (12) EUROPÄISCHE PATENTANMELDUNG

(21) Anmeldenummer: 85100170.1

(22) Anmeldetag: 09.01.85

(51) Int. Cl.⁴: **B 01 D 53/34**

(30) Priorität: 16.01.84 CH 176/84

(43) Veröffentlichungstag der Anmeldung: 28.08.85
Patentblatt 85/35

(84) Benannte Vertragsstaaten: **AT BE CH DE FR GB IT LI LU NL SE**

(71) Anmelder: **MVT Micro-Verschleiss-Technik und Apparatebau AG, Unterer Kanalweg 15, CH-2560 Nidau (CH)**

(72) Erfinder: **Frick, Adolf, Haus zur Linde, CH-7304 Maienfeld (CH)**

(74) Vertreter: **Riederer, Conrad A., Dr., Bahnhofstrasse 10, CH-7310 Bad Ragaz (CH)**

(54) Verfahren und Vorrichtung zum Reinigen der Abgase von Feuerungsanlagen, insbesondere von solchen bei Ein- und Mehrfamilienhäusern und dergleichen.

(57) Die Abgase, z.B. eines Heizkessels, werden durch den Abgaseinlass (21) in einen Raum (33) geführt, in welchem ein Sprühregen erzeugt wird. Die Abgase fließen dann durch das Steinbett (35) in einen Raum (36), wo ebenfalls ein Sprühregen vorherrscht. Vom Raum (36) fließen die Abgase im Gegenstrom zu einem Sprühregen durch das Abteil (19) zum Abgasauslaß (27). Auf diesem Weg findet ein Stoff- und Wärmeaustausch statt. Zudem wird das in den Abgasen enthaltene Wasser weitgehend kondensiert. Dem im Behälter (11) enthaltenen Wasser wird periodisch, gesteuert durch die Steuereinrichtung (59), gelöschter Kalk als Neutralisationsmittel zugeführt. Über den Wärmetauscher (49) wird die bei der Abgasreinigung anfallende Wärme für Heizzwecke nutzbar gemacht, indem das durch den Einlaß (51) einströmende Rücklaufwasser vor seinem Eintritt in den Heizkessel erwärmt wird.

Verfahren und Vorrichtung zum Reinigen der Abgase
von Feuerungsanlagen, insbesondere von solchen bei
Ein- oder Mehrfamilienhäusern und dergleichen

Die Erfindung betrifft ein Verfahren zum Reinigen der Abgase von Feuerungsanlagen, insbesondere von solchen bei
Ein- oder Mehrfamilienhäusern und dergleichen.

Bei Grossanlagen, wie Kraftwerken, Kehrichtverbrennungsanlagen, sind seit längerer Zeit verschiedene Verfahren
zum Reinigen der Abgase im Einsatz. Währenddem also im
industriellen Bereich Massnahmen zur Reinhaltung der Luft
im Einsatz sind, ist dies bei Feuerungsanlagen, wie sie
bei Millionen von Ein- oder Mehrfamilienhäusern zur Raumheizung und zur Warmwasserbereitung im Einsatz sind, nicht
der Fall. In diesen Feuerungsanlagen werden jedoch wesentlich mehr fossile Brennstoffe verbrannt als in den industriellen Anlagen und dementsprechend ist auch der Anteil
der Raumheizung und Warmwasserbereitung an der Luftverschmutzung entsprechend gross. Dieses Problem ist schon seit längerer Zeit bekannt, doch ist es bisher nicht gelungen, für relativ kleine Anlagen wirtschaftliche Verfahren und Vorrichtungen zum Reinigen der Abgase zu schaffen, die befriedigend funktionieren und auch wirtschaftlich tragbar sind.

Wenn bisher auch Fortschritte auf dem Gebiet der Reinigung von Abgasen von Heizkesseln, wie sie bei Wohnhäusern verwendet werden, fehlten, wurden doch gewisse Fortschritte im Hinblick auf die Verminderung des Heizölverbrauchs gemacht. So vermindert verbesserte Hausisolation Wärmeverluste. Kamine aus rostfreiem Stahl erlauben tiefere Abgastemperaturen und somit einen höheren Wirkungsgrad der Heizanlage. Von Interesse sind auch sogenannte Brennwertkessel, bei denen der im Abgas enthaltene Wasserdampf kondensiert und somit auch die Kondensationswärme genutzt wird. Da im Kondenswasser auch Schadstoffe gelöst sind, wird die Luft zusätzlich weniger belastet. Wird aber das Kondenswasser in die Kanalisation geleitet, so hat dies eine unerwünschte Umweltbelastung zur Folge. Saures Kondenswasser aus Kaminen und Brennwertkesseln aus rostfreiem Stahl enthält aus dem Stahl gelöste Schwermetalle, wie Chrom. Dieses gelangt über den Klärschlamm in den Boden. Wenn bisher die bestehenden Kläranlage noch nicht übermässig durch saures und mit Schwermetallen beladenes Kondenswasser aus Heizungen beeinträchtig wurden, so ist dies vor allem der Tatsache zuzuschreiben, dass relativ korrosionsfeste Kamine und Brennwertkessel aus rostfreiem Stahl sehr teuer sind und noch relativ wenig Anwendung gefunden haben.

Es ist Aufgabe der vorliegenden Erfindung, ein Verfahren zum Reinigen der Abgase zu schaffen, das sich insbesondere für den Einsatz bei relativ kleinen Feuerungsanlagen eignet, wie sie bei Ein- oder Mehrfamilienhäusern im Einsatz sind.

Das erfinderische Verfahren sieht vor, dass Wasser, insbesondere dem durch Kondensation anfallenden Wasser, periodisch oder kontinuierlich ein Mittel zur Neutralisierung der Schadstoffe, die in den Abgasen enthalten sind, zugeführt wird, dass die Abgase in einem Behälter in Kontakt mit diesem Wasser gebracht werden, wobei mindestens ein Teil der Schadstoffe und/oder des Wasserdampfes den Abgasen entzogen und neutralisiert bzw. kondensiert wird, und dass dem Behälter periodisch oder kontinuierlich überschüssiges Wasser entnommen wird. Dieses Verfahren hat den Vorteil, dass es mit relativ einfachen Mitteln eine wirksame Reinigung der Abgase ermöglicht. So werden den Abgasen insbesondere Schwefel- und Stickstoffverbindungen, z.B. $SO_2$, $SO_3$ und $NO$, $NO_2$, entzogen.

Das Wasser wird vorteilhaft in einem Kreislauf umgewälzt. Dies hat den Vorteil, dass grundsätzlich nach einer ersten Füllung keine weitere Wasserzufuhr mehr notwendig ist. Des weiteren wird das Neutralisierungsmittel voll ausgenützt. Das Verfahren ist besonders wirksam, wenn die Umwälzung im Gegenstrom zu den Rauchgasen erfolgt. Dies ermöglicht eine kleine und daher billige Dimensionierung der Vorrichtung zur Durchführung des Verfahrens.

Eine ganz besonders wichtige Ausgestaltung des Verfahrens sieht vor, dass dem Wasser Wärme entzogen und dem Wärmetransportmedium, z.B. dem Rücklaufwasser einer Heizungsanlage, zugeführt wird. Bei der Verbrennung von einem Kilogramm Heizöl fallen in den Abgasen ungefähr 0,8 kg Wasser in Form von Wasserdampf an. Wenn nun mit einer relativ niedrigen Verfahrenstemperatur gearbeitet wird, so kondensiert dieses Wasser, so dass die dabei frei werdende Wärme ebenfalls zu Heizzwecken zur Verfügung steht. Ein weiterer Vorteil besteht darin, dass durch die Abkühlung das Volumen der Abgase stark reduziert wird, so dass die Vorrichtung zur Reinigung der Abgase relativ klein bemessen werden kann, bzw. die Verweildauer der Abgase länger ist und somit eine bessere Reinigung stattfindet. Die erhöhte Wärmeausbeute senkt den Brennstoffbedarf und trägt so weiter zur Reinhaltung der Luft bei. Von wirtschaftlichem Interesse ist dabei, dass durch die Brennstoffersparnisse die zusätzlichen Kosten der Reinigungsvorrichtung rasch amortisiert werden können.

Diese Ausbildung des Verfahrens bringt also die Vorteile des Brennwertkessels, bei dem der im Abgas enthaltene Wasserdampf kondensiert wird, nicht aber die Nachteile eines solchen Kessels. Es ist also kein Kessel aus rostfreiem Stahl notwendig, denn beim erfindungsgemässen Verfahren erfolgt die Kondensation des Wasserdampfes erst nachdem die Abgase den Kessel verlassen haben.

Gemäss einer vorteilhaften Ausführungsform der Erfindung, werden die Abgase durch einen Sprühregen geführt. Dank der relativ grossen Oberfläche der Gesamtheit der Wassertropfen erfolgt ein rascher Stoff- und Wärmeaustausch. Nach diesem Abkühlungs- und Reinigungsschritt ist dank der Abkühlung das Volumen der Abgase bereits relativ klein. Dies ist von besonderem Vorteil, wenn gemäss einer weiteren Ausbildung des Verfahrens die Abgase durch ein Steinbett geführt werden. Dieses Steinbett besteht aus schadstoffbeständigen Steinen, auf welche das Wasser des Sprühregens fällt. Das Steinbett schafft eine relativ grosse Oberfläche, mit welcher Wasser und Abgase miteinander in Kontakt treten. Wichtig ist aber auch, dass das Steinbett eine starke Turbulenz bewirkt, welche die Aufoxidation des $SO$ und $SO_2$ begünstigt. Die Turbulenz ist wichtig, weil zur Erreichung eines hohen Wirkungsgrades die Heizanlage mit einem nur geringen Luftüberschuss gefahren wird.

-5-

Vorteilhaft werden die Abgase nach dem Verlassen des Steinbetts nochmals durch einen Sprühregen geführt. Die Abgase
besitzen nach den ersten Reinigungsschritten ein erheblich
kleineres Volumen und haben eine verhältnismässig geringe
Geschwindigkeit. Es hat sich gezeigt, dass in dieser Phase
hauptsächlich noch verbleibendes $NO_x$ ausgeschieden wird.

Ein besonderes Problem stellt die Dosierung der Neutralisierungsmittel dar. Gemäss einer vorteilhaften Ausgestaltung des Verfahrens wird die Zugabe der Mittel zur Neutralisierung der Schadstoffe durch die Menge des anfallenden
Kondenswassers gesteuert. Dieses Verfahren nutzt also die
Erkenntnis, dass z.B. bei der Verbrennung einer bestimmten
Menge Heizöl eine entsprechende Menge von Kondenswasser anfällt. Die Nutzung dieser Erkenntnis führt zu einer verblüffend einfachen Lösung des Dosierungsproblems.

Als Mittel zur Neutralisierung der Schadstoffe wird vorteilhaft eine Suspension von gelöschtem Kalk in Wasser verwendet.
Dies ist relativ billig ung führt bei ihrer Verwendung zu
einer Ausfällung, die als Gartendünger Verwendung finden
kann.

Es ist aber auch möglich, zur Neutralisierung der Schadstoffe
eine Lauge, z.B. Natronlauge, zu verwenden. Ein flüssiger
Zusatzstoff, wie z.B. Natronlauge kann leicht dem Kondenswasser beigemischt werden. Von besonderem Vorteil ist die
Verwendung einer Lauge, wie z.B. Natronlauge, die mit den
Schadstoffen eine im Wasser lösliche Verbindung bildet, weil
dadurch möglichen Verstopfungstendenzen entgegengewirkt wird.

Die Erfindung betrifft auch eine Vorrichtung zur Durchführung
des Verfahrens. Diese Vorrichtung ist gekennzeichnet durch
einen verschliessbaren Wasserbehälter mit einem Abgaseinlass und einem Abgasauslass, und einer Dosieranlage zur Zugabe von Mitteln zur Neutralisierung der Schadstoffe. Diese Vorrichtung ist ausserordentlich einfach und kostengünstig. Da die Schadstoffe laufend neutralisiert werden, entstehen keine grossen Korrosionsprobleme. Daher kann die ganze Vorrichtung aus relativ billigen Materialien hergestellt werden. Es besteht auch keine Gefahr, dass Schwermetalle der Kläranlage zugeführt werden.

Zweckmässigerweise ist eine Umwälzpumpe vorgesehen, welche Wasser vom Unterteil des Wasserbehälters zum Oberteil pumpt. Auf diese Weise wird eine innige Durchmischung der Abgase mit dem Wasser erzielt.

Zweckmässigerweise ist im Kreislauf ein Wärmetauscher vorgesehen. Es kann sich dabei um einen Gegenstrom-Wärmetauscher handeln, wobei Wärme aus der Vorrichtung an die Zentralheizungsanlage abgegeben wird. Zu diesem Zweck fliesst also das Rücklaufwasser der Zentralheizungsanlage zuerst durch den Wärmetauscher, bevor es dem Heizkessel zurückgeleitet wird. Wie bereits früher erwähnt wurde, wird dadurch der Wirkungsgrad der Heizanlage beträchtlich erhöht. Eine zweckmässige Ausgestaltung der Vorrichtung sieht vor, dass im Oberteil des Wasserbehälters ein Siebblech vorgesehen ist, um einen Rieselregen in einem Behälterteil zu erzeugen, wo der Abgaseinlass angeordnet ist. In diesem Rieselregen findet die erste Reinigung und Abkühlung der Abgase statt. Unter dem Siebblech ist dann vorteilhaft ein Steinbett angeordnet. Dank der grossen Oberfläche der vom Rieselregen benetzten Steine findet hier ein intensiver Stoff- und Wärmeaustausch statt.

Eine zweckmässige Ausgestaltung der Vorrichtung sieht vor, dassdas Siebblech den Boden eines Troges darstellt, der einen Ueberlauf besitzt, über den Wasser in ein Abteil des Wasserbehälters fliessen kann, in welchem das Abgas zum Abgasauslass fliesst. Dieser Trog hat somit den Vorteil, dass er eine Verteilung des Wassers in verschiedene Abteile des Behälters bewirkt. Zudem hat der Trog die Funktion eines Wasserreservoirs, dessen Inhalt mit einfachen Mitteln aus der Vorrichtung periodisch abgelassen werden kann.

Zweckmässigerweise ist eine Steuereinrichtung vorgesehen, um beim Erreichen eines vorbestimmten Wasserniveaus im Behälter das Ablassen des überschüssigen Wassers aus dem Behälter zu steuern, und/oder die Dosieranlage zu betätigen. Dabei ist vorteilhaft ein Wasserablauf in vorbestimmter Höhe am Behälter angeordnet und die Steuereinrichtung mit der Umwälzpumpe verbunden, um bei Erreichen des vorbestimmten Wasserniveaus die Umwälzpumpe abzustellen, bis sich der Trog entleert hat und das überschüssige Wasser über den Wasserauslauf abgeflossen ist. Durch diese geschickte Kombination wird vermieden, dass im Kreislauf ein Dreiwegventil vorgesehen werden muss, um von Zeit zu Zeit überschüssiges Wasser abzupumpen.

Zweckmässigerweise ist die Vorrichtung so ausgebildet, dass die Dosieranlage ein an eine Druckquelle, z.B. an eine Wasserleitung angeschlossenes Steuerventil aufweist, das von der Steuervorrichtung in Abhängigkeit der verbrannten Brennstoffmgenge periodisch kurzzeitig betätigt wird, um Druckmittel, z.B. Wasser, über eine Drossel einem Neutralisierungsmittelspeicher zuzuführen, der mit dem Wasserbehälter verbunden ist, so dass diesem bei jeder Betätigung des Steuerventils eine vorbestimmte Menge Neutralisierungsmittel zugeführt wird. Diese Ausgestaltung der Dosieranlage ist sehr einfach und daher auch billig.

Die Erfindung umfasst auch die Verwendung der erfindungsgemässen Vorrichtung mit einem Oelvergasungsbrenner, insbesondere von der Art gemäss EP-A- 0 036 128. Die Kombination
mit einem Oelvergasungsbrenner ist deshalb besonders interessant, weil ein solcher Oelbrenner keine Abgase mit unverbranntem Kohlenwasserstoffresten erzeugt, welche das gute
Funktionieren der Reinigungsvorrichtung beeinträchtigen
könnten oder zusätzliche Mittel zur Abscheidung erfordern.
Ein solcher Brenner kann als modulierender Brenner ausgestaltet sein, welcher einen gleitenden Betrieb ermöglicht,
also je nach Wärmebedarf mehr oder weniger Wärme liefert. Da
die Dosierung des Neutralisationsmittels durch die Menge des
anfallenden Kondenswassers gesteuert wird, bietet die Abgasreinigung auch bei einem modulierenden Brenner keine Probleme.

Die Erfindung wird nun unter Bezugnahme auf die Zeichnung beschrieben. Es zeigt:

Fig. 1    eine schematische Darstellung der Vorrichtung
          zur Durchführung des Verfahrens und

Fig. 2    eine schematische Darstellung der bei der in

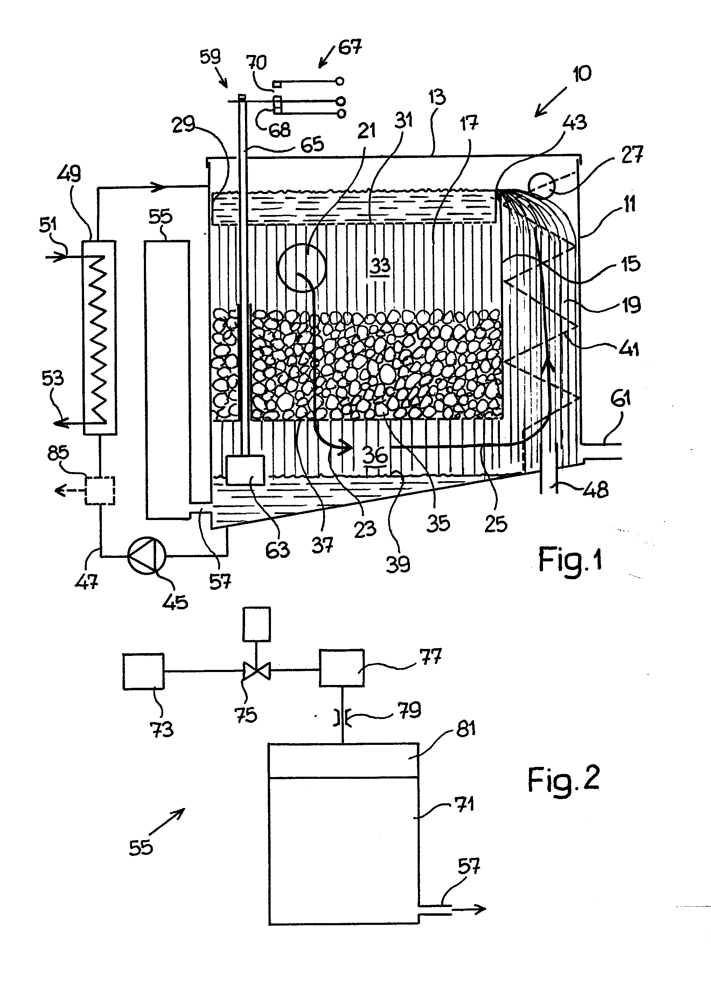

          Figur 1 gezeigten Vorrichtung verwendeten
          Dosieranlage für das Neutralisierungsmittel.

Die in Figur 1 dargestellte Vorrichtung 10 zeigt einen
Wasserbehälter 11, der durch einen Deckel 13 abgeschlossen
ist. Durch eine Trennwand 15 wird der Wasserbehälter 11 in
zwei Abteile 17, 19 aufgeteilt. Durch den Abgaseinlass 21
fliessen die Abgase aus einem Heizkessel in Richtung des
Pfeils 23 durch das Abteil 17 und weiter in Richtung des
Pfeils 25 durch das Abteil 19 zum Abgasauslass 27.

Im Abteil 17 befindet sich ein Trog 29, dessen Boden als
Siebblech 31 ausgebildet ist. Wie schematisch dargestellt,
bildet sich im Raum 33 unter dem Siebblech 31 ein Sprühregen, der auf ein Steinbett 35 fällt, welches über einem weiteren Siebblech 37 angeordnet ist. Im Raum 36 unter dem Siebblech 37 bildet sich wiederum ein Sprühregen, wobei sich dann im unteren Teil des Behälters das Wasser ansammelt, wie dies durch das Niveau 39 dargestellt ist.

Im Abteil 19 befindet sich ein beispielsweise zick-zackförmig abgebogenes Siebblech 41. Wenn sich Wasser über den Ueberlauf 43 des Troges 29 ergiesst, bewirkt das Siebblech 41 im Abteil 19 ebenfalls einen Sprühregen.

Eine Umwälzpumpe 45 ist vorgesehen, welche aus dem unteren Teil des Wasserbehälters 11 Wasser im Kreislauf über die Leitung 47 in den Trog 29 im oberen Teil des Behälters pumpt. In diesem Kreislauf ist ein Gegenstrom-Wärmetauscher 49 vorgesehen, dessen Einlass 51 am Rücklauf einer Zentralheizungsanlage und dessen Auslass 53 am Heizkessel der Zentralheizungsanlage angeschlossen ist. Dies ermöglicht es, das Rücklaufwasser vor dem Eintritt in den Heizkessel auf eine höhere Temperatur anzuheben, bzw. das in der Reinigungsvorrichtung im Kreislauf umgeführte Wasser abzukühlen.

Mit dem Bezugszeichen 55 ist eine Dosiereinrichtung dargestellt, welche kontinuierlich oder periodisch dem Wasser im Behälter 11 ein Neutralisierungsmittel über die Leitung 57 zuführt. Diese Dosierungseinrichtung 55 wird durch eine Steuereinrichtung 59 gesteuert, welche beim Erreichen eines vorbestimmten Wasserniveaus 39 die Dosiereinrichtung betätigt und zugleich ein Ablassen des überschüssigen Wassers aus dem Behälter 11 über die Leitung 61 bewirkt. Die Dosiereinrichtung 59 besteht im wesentlichen aus dem Schwimmer 63 mit der Bestätigungsstange 65 und dem Schnappschalter 67.

Ein Ausführungsbeispiel der Dosieranlage 55 von Fig. 1 ist schematisch in Figur 2 dargestellt. Der Neutralisierungsmittelspeicher 71 enthält ein Neutralisierungsmittel, z.B. eine Suspension von gelöschtem Kalk in Wasser. Der Neutralisierungsmittelspeicher 71 ist über die Leitung 57 mit dem Wasserbehälter 11 (Fig. 1) verbunden. Die Förderung des Neutralisierungsmittels erfolgt durch ein Druckmittel. In Figur 2 ist daher schematisch ein Druckmittelspeicher 73 dargestellt. Als Druckmittel kann beispielsweise Wasser dienen. Der mit der Bezugsziffer 73 bezeichnete Teil braucht also nichts anderes als ein Anschluss an eine Wasserleitung zu sein. Das Magnetventil 75 ist normalerweise geschlossen. Ein Druckreduzierventil 77 kann vorgesehen werden, um den Druck herabzusetzen. Eine Verengung 79 bewirkt, dass bei einem gegebenen Druck pro Zeiteinheit eine vorbestimmte Menge Wasser in den Speicher 71 fliesst. Das Wasser nimmt dank seinem relativ geringen spezifischen Gewicht den Raum im oberen Teil des Behälters ein, wie dies mit der Bezugsziffer 81 angedeutet ist. Oeffnet also das Magnetventil 75, so fliesst Wasser in den Speicher 71 und drückt eine vorbestimmte Menge Neutralisierungsmittel durch die Leitung 57 in den Wasserbehälter 11.

Die Vorrichtung arbeitet wie folgt: Vor der Inbetriebnahme wird der Wasserbehälter 11 mit Wasser gefüllt, bis etwa das eingezeichnete Niveau 39 erreicht ist. Diesem Wasser wird genügend Neutralisierungsmittel aus dem Speicher 71 zugegeben. Solange der Kontakt 68 des Schnappschalters 67 geschlossen ist, wird beim Einschalten des (nicht eingezeichneten) Hauptschalters die Umwälzpumpe 45 in Betrieb gesetzt. Diese pumpt Wasser in den Trog 29, wobei ein Teil des Wassers durch das Siebblech 31 fliesst, während ein anderer Teil des Wassers

-11-

über den Ueberlauf 43 auf das Siebblech 41 fliesst. In den Räumen 33 und 36 entsteht somit ein Rieselregen und das Steinbett 35 wird benetzt. Auch im Abteil 19 entsteht ein Rieselregen. Die aus dem Heizkessel kommenden heissen Abgase sind zuerst dem Rieselregen im Raum 33 ausgesetzt, wo sie sich erheblich abkühlen. Sie fliessen dann nach unten durch das Steinbett 35, sind wiederum einem Rieselregen im Raum 36 ausgesetzt und fliessen dann nach oben im Rieselregen des Abteils 19 zum Abgasauslass 27. Bei diesem Durchgang durch die Vorrichtung findet ein erheblicher Stoff- und Wärmeaustausch statt, so dass die Abgase den Auslass 27 mit einer Temperatur von etwa 30 bis 50° C und praktisch schadstofffrei verlassen. Da die Abgase kaum noch korrodierende Stoffe enthalten, kann das Kamin beispielsweise durch ein Aluminiumrohr gebildet werden. Da die Temperaturen sehr niedrig sind, würde sogar ein Kunststoffrohr genügen. Gegenüber der bisherigen Verwendung von Rohren aus rostfreiem Stahl wird dadurch eine erhebliche Verbilligung erzielt, wobei noch zu berücksichtigen ist, dass der Rohrdurchmesser wegen der tiefen Temperaturen und somit des geringen Volumens der Abgase kleiner als üblich gehalten werden kann.

Zu beachten ist noch, dass die tiefen Abgastemperaturen und die hohe Wärmenutzung ohne teuren korrosionsfesten Brennwertkessel erreicht werden. Es kann vielmehr ein billiger Heizkessel in Guss- oder Blechbauweise Verwendung finden, wobei auch keine Gefährdung der Umwelt durch Schwermetalle erfolgt.

Messungen haben gezeigt, dass im Abteil 17 insbesondere eine Abscheidung von $SO_2$, $SO_3$ erfolgt, währenddem im Abteil 19 vor allem $NO_x$ ausgeschieden wird. Die Abscheidung

-12-

von $NO_X$ aus den Abgasen kann durch Einblasen von Frischluft vom Brennergebläse über die Leitung 48 begünstigt werden.

Die von den Abgasen an das umgewälzte Wasser abgegebene Wärme wird durch den Wärmetauscher 49 an das Rücklaufwasser der Heizanlage abgegeben. Das im Behälter 11 umgewälzte Wasser besitzt daher eine relativ niedrige Temperatur, so dass der in den Abgasen enthaltene Wasserdampf kondensiert wird, was wesentlich zur Wärmerückgewinnung für die Heizungsanlage beiträgt.

Es leuchtet ein, dass wegen des Anfalls von Kondensatwasser der Spiegel 39 im Behälter 11 ständig steigt. Da die Menge des anfallenden Kondensats abhängig ist von der Menge des verbrannten Brennstoffes und somit der Schadstoffproduktion, kann die anfallende Kondensatwassermenge zur Steuerung der Dosiereinrichtung 55 verwendet werden. Dies geschieht so:

Wenn der Schwimmer 63 genügend angehoben wird, schliesst der Kontakt 70 des Schnappschalters 67. Dadurch wird das Magnetventil 75 betätigt. Es fliesst Wasser in den Neutralisierungsmittelspeicher 71 und drückt Neutralisierungsmittel über die Leitung 57 in den Behälter 11. Dies erfolgt lediglich über eine vorbestimmte Zeitspanne, die durch ein elektrisches Verzögerungselement bestimmt werden könnte. Bei der dargestellten Vorrichtung wird jedoch diese Zeitspanne durch das Ausfliessen des Wassers im Trog 29 bestimmt. Wenn nämlich der Kontakt 68 öffnet, so stellt die Umwälzpumpe 45 ab. Das im Trog 29 enthaltene Wasser fliesst nach unten, wo es durch die Leitung 61 als überschüssiges Wasser abfliessen kann. Ist das Niveau 39 wieder abgesunken, was eine vorbestimmte Zeit dauert, so öffnet der Kontakt 70, so dass das Magnetventil 75 schliesst und kein weiteres Neutralisierungs-

-13-

mittel dem Behälter 11 zugeführt wird. Da der Kontakt 68 wieder geschlossen ist, läuft die Pumpe 45 wieder, so dass der Trog 29 wieder gefüllt wird und die Vorrichtung weiter arbeitet, bis ein erneuter Anstieg des Niveaus 39 durch anfallendes Kondenswasser die Dosiereinrichtung 55 betätigt.

Es sind verschiedene Aenderungen des beschriebenen Verfahrens und der Vorrichtung möglich, ohne vom Grundgedanken der Erfindung abzuweichen. So könnte beispielsweise die Pumpe 45 benützt werden, um über ein Dreiwegventil 85 überschüssiges Wasser aus dem Behälter 11 abzupumpen. Es wäre auch möglich, Frischluft vom Brenner zur Abteilung 17 zu leiten, um die Oxidation der Schadstoffe zu fördern.

- 14 -

Patentansprüche

1. Verfahren zum Reinigen der Abgase von Feuerungsanlagen, insbesondere von solchen bei Ein- oder Mehrfamilienhäusern oder dergleichen, dadurch gekennzeichnet, dass Wasser periodisch oder kontinuierlich ein Mittel zur Neutralisierung von in den Abgasen enthaltenen Schadstoffen zugefügt wird, dass die Abgase in einem Behälter in Kontakt mit diesem Wasser gebracht werden, wobei mindestens ein Teil der Schadstoffe und/oder des Wasserdampfes den Abgasen entzogen und neutralisiert bzw. kondensiert wird, und dass dem Behälter periodisch oder kontinuierlich überschüssiges Wasser entnommen wird.

2. Verfahren nach Anspruch 1, dadurch gekennzeichnet, dass das Wasser in einem Kreislauf umgewälzt wird.

3. Verfahren nach Anspruch 2, dadurch gekennzeichnet, dass die Umwälzung im Gegenstrom zu den Abgasen erfolgt.

4. Verfahren nach Anspruch 1 oder 2, dadurch gekennzeichnet, dass dem Wasser Wärme entzogen und dem Wärmetransportmedium, z.B. dem Rücklaufwasser, einer Heizungsanlage zugeführt wird.

5. Verfahren nach einem der Ansprüche 1 bis 4, dadurch gekennzeichnet, dass die Abgase durch einen Sprühregen geführt werden.

6. Verfahren nach einem der Ansprüche 1 bis 5, dadurch gekennzeichnet, dass die Abgase durch ein mit dem Wasser benetztes Steinbett geführt werden.

7. Verfahren nach Anspruch 6, dadurch gekennzeichnet, dass die Abgase nochmals durch einen Sprühregen geführt werden.

8. Verfahren nach einem der Ansprüche 1 bis 7, dadurch gekennzeichnet, dass die Zugabe der Mittel zur Neutralisierung der Schadstoffe durch die Menge des anfallenden Kondenswassers gesteuert wird.

9. Verfahren nach einem der Ansprüche 1 bis 8, dadurch gekennzeichnet, dass das Mittel zur Neutralisierung der Schadstoffe eine Suspension von gelöschtem Kalk in Wasser ist.

10. Verfahren nach einem der Ansprüche 1 bis 8, dadurch gekennzeichnet, dass das Mittel zur Neutralisierung der Schadstoffe eine Lauge, z.B. Natronlauge, ist.

11. Verfahren nach einem der Ansprüche 1 bis 9, dadurch gekennzeichnet, dass den Abgasen Luft vom Gebläse eines Brenners zugeführt wird.

12. Vorrichtung zur Durchführung des Verfahrens nach einem der Ansprüche 1 bis 11, gekennzeichnet durch einen verschliessbaren Wasserbehälter (11) mit einem Abgaseinlass (21) und einem Abgasauslass (27), und einer Dosieranlage (55) zur Zugabe von Mitteln zur Neutralisierung der Schadstoffe.

13. Vorrichtung nach Anspruch 12, dadurch gekennzeichnet, dass eine Umwälzpumpe (45) vorgesehen ist, welche Wasser im Kreislauf vom Unterteil des Wasserbehälters (11) zum Oberteil des Wasserbehälters (11) pumpt.

14. Vorrichtung nach Anspruch 12 oder 13, dadurch gekennzeichnet, dass im Kreislauf (47) oder im Wasserbehälter (11) ein Wärmetauscher (51) vorgesehen ist.

15. Vorrichtung nach einem der Ansprüche 12 bis 14, dadurch gekennzeichnet, dass im Oberteil des Wasserbehälters (11) ein Siebblech (31) vorgesehen ist, um einen Rieselregen in einem Behälterteil (33) zu erzeugen, wo der Abgaseinlass (21) angeordnet ist.

16. Vorrichtung nach Anspruch 15, dadurch gekennzeichnet, dass unter dem Siebblech (31) ein Steinbett (35) angeordnet ist.

17. Vorrichtung nach Anspruch 15 oder 16, dadurch gekennzeichnet, dass das Siebblech (31) den Boden eines Troges (29) darstellt, der einen Ueberlauf (43) besitzt, über den Wasser in ein Abteil (19) des Wasserbehälters (11) fliessen kann, in welchem das Abgas zum Abgasauslass (27) fliesst.

18. Vorrichtung nach einem der Ansprüche 1 bis 17, dadurch gekennzeichnet, dass eine Steuereinrichtung (59) vorgesehen ist, um beim Erreichen eines vorbestimmten Wasserniveaus (39) im Wasserbehälter (11) das Ablassen des überschüssigen Wassers zu steuern und/oder die Dosieranlage (55) zu betätigen.

19. Vorrichtung nach Anspruch 18, dadurch gekennzeichnet, dass ein Wasserablauf (61) in vorbestimmter Höhe am Wasserbehälter (11) angeordnet ist und die Steuereinrichtung (59) mit der Umwälzpumpe (45) verbunden ist, um beim Erreichen des vorbestimmten Wasserniveaus (39) die Umwälzpumpe (45) abzustellen, bis sich der Trog (29) entleert hat und das überschüssige Wasser über den Wasserablauf (61) abgeflossen ist.

20. Vorrichtung nach einem der Ansprüche 1 bis 19, dadurch gekennzeichnet, dass die Dosieranlage (55) ein an eine Druckquelle (73), z.B. eine Wasserleitung, angeschlossenes Steuerventil (75) aufweist, das von der Steuereinrichtung (59) in Abhängigkeit der verbrannten Brennstoffmenge periodisch kurzzeitig betätigt wird, um Druckmittel, z.B. Wasser, über eine Drossel (79) einen Neutralisierungsmittelspeicher (71) zuzuführen, der mit dem Wasserbehälter (11) verbunden ist, so dass dem Wasserbehälter bei jeder Betätigung des Steuerventils (75) eine vorbestimmte Menge Neutralisierungsmittel zugeführt wird.

21. Vorrichtung nach Anspruch 20, dadurch gekennzeichnet, dass zusätzlich zum Steuerventil (75) ein Druckreduzierventil (77) vorgesehen ist, um die Menge des zugeführten Neutralisierungsmittel zu steuern.

22. Verwendung der Vorrichtung nach einem der Ansprüche 12 bis 21, mit einem Oelvergasungsbrenner.

Fig.1

Fig.2

0152742

Europäisches
Patentamt

**EUROPÄISCHER RECHERCHENBERICHT**

Nummer der Anmeldung

EP 85 10 0170

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 097 631 (U. JOHANSSON)<br><br>* Ansprüche 1-3,8; Figur 1 * | 1,2,4-7,13,14 | B 01 D 53/34 |
| A,P | WO-A-8 403 843 (L. FOIDL)<br><br>* Zusammenfassung; Figur 2 * | 1,2,5,15 | |
| A | DK-C- 114 640 (AKTIEBOLAGET BAHCO)<br>* Anspruch 1; Figur * | 1,8,10 | |
| A | DE-A-3 024 228 (GEBR. DECKER OBERFLÄCHENTECHNIK GMBH)<br>* Ansprüche 1,3; Figur 1 * | | |
| A | DE-A-2 849 607 (CIBA-GEIGY AG)<br><br>* Ansprüche 1,14,23,31; Figuren 1,6; Seite 26, Zeilen 24-30 * | 1,2,7,10-14 | RECHERCHIERTE SACHGEBIETE (Int. Cl.4)<br><br>B 01 D 53/00<br>F 23 J 15/00 |

Der vorliegende Recherchenbericht wurde für alle Patentansprüche erstellt.

| Recherchenort<br>BERLIN | Abschlußdatum der Recherche<br>23-04-1985 | Prüfer<br>BERTRAM H E H |
|---|---|---|